# EUROPEAN PATENT APPLICATION

(11) **EP 2 915 703 A1**
(43) Date of publication of application: **09.09.2015**
(21) Application number: 15154778.3
(22) Date of filing: 12.02.2015
(51) Int. Cl.: B60R 19/12, B60R 19/34, B62D 25/08

(54) **Front structure of vehicle body**

(30) Priority: 07.03.2014 JP 2014045718
(71) Applicant: Toyota Jidosha Kabushiki Kaisha, Toyota-shi, Aichi-ken, 471-8571 (JP)
(72) Inventor: Mori, Takeo, Toyota-shi, Aichi-ken, Aichi 471-8571 (JP)
(74) Representative: Winter, Brandl, Fürniss, Hübner, Röss, Kaiser, Polte - Partnerschaft mbB

(57) **Abstract**

A front structure of a vehicle body includes a first bumper reinforcement (33) extending in a lateral direction of the vehicle body. A second bumper reinforcement (34) extends in the lateral direction of the vehicle body below the first bumper reinforcement (33). Two first crash boxes (30) are coupled to the two ends of the first bumper reinforcement (33). Two second crash boxes (31) are coupled to the two ends of the second bumper reinforcement (34). Two vertical posts (15) are coupled to the rear ends of the first and second crash boxes (30, 31). Two side frames (11) are coupled to the two vertical posts (15) opposite to the first crash boxes (30). Two lower members (14) are coupled to the two vertical posts (15) opposite to the second crash boxes (31). A lower support member (36) couples the second crash boxes (31) to each other and forms a lower portion of a radiator support (70).

## Description

### BACKGROUND OF THE INVENTION

The present invention relates to a front structure of a vehicle body that absorbs collision load applied from the front of a vehicle body.

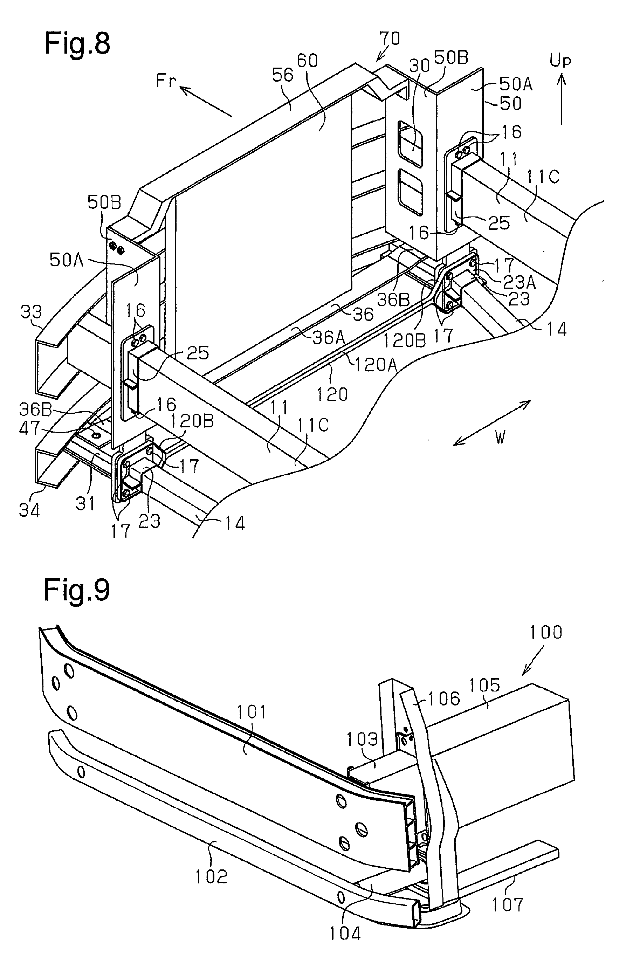

Japanese Laid-Open Patent Publication No. 2009-40187 describes a bumper device that is one example of a front structure of a vehicle body. As shown in Fig. 9, the bumper device 100 includes a first bumper reinforcement 101 and a second bumper reinforcement 102, which extend in the lateral direction of a vehicle body. First crash boxes 103 (only one shown in the drawing), which extend in the longitudinal direction of the vehicle body, are coupled to the two ends of the first bumper reinforcement 101. Second crash boxes 104 (only one shown in the drawing), which extend in the longitudinal direction of the vehicle body, are coupled to the two ends of the second bumper reinforcement 102. A side member 105, which forms a portion of the vehicle body, is coupled to the rear end of each first crash box 103 with a side support member 106 located in between. The front end of a lower member 107, which extends in the longitudinal direction of the vehicle body, is coupled to the rear end of each second crash box 104. A suspension member (not shown), which forms a portion of the vehicle body, is coupled to the rear end of the lower member 107. The side support members 106 (only one shown in the drawing), which are located at the two lateral sides of the vehicle body, are used to support a radiator (not shown). A lower support member (not shown), which extends between the lower ends of the side support member 106, supports the bottom surface of the radiator.

### SUMMARY OF THE INVENTION

In the bumper device 100, the efficiency for absorbing collision load applied from the front of the vehicle body is increases as the first and second crash boxes 103 and 104 become longer. However, when the first and second crash boxes 103 and 104 are lengthened, the open space behind the radiator becomes smaller. This will affect the capacity for accommodating on-board components.

It is an object of the present invention to provide a front structure of a vehicle body that increases the collision load absorption efficiency, while ensuring or maintaining the accommodation capacity of on-board components.

One aspect of the present invention is a front structure of a vehicle body. A first bumper reinforcement extends in a lateral direction of the vehicle body. A second bumper reinforcement extends in the lateral direction of the vehicle body below the first bumper reinforcement. Two first crash boxes are each coupled to one of two ends of the first bumper reinforcement. Each of the first crash boxes includes a front end, which is coupled to the first bumper reinforcement, and a rear end, which is located toward the rear of a vehicle from the front end. Two second crash boxes are each coupled to one of two ends of the second bumper reinforcement. Each of the second crash boxes includes a front end, which is coupled to the second bumper reinforcement, and a rear end, which is located toward the rear of the vehicle from the front end. Two vertical posts couple the rear ends of the first and second crash boxes. The vertical posts are located at two sides of the vehicle body in the lateral direction. Two side frames are respectively coupled to the two vertical posts opposite to the first crash boxes. Two lower members are coupled to the two vertical posts opposite to the second crash boxes. A lower support member couples the second crash boxes to each other and forms a lower portion of a radiator support.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a perspective view showing one embodiment of a front structure of a vehicle body taken from a diagonally upper front position;
Fig. 2 is a perspective view showing the front structure of the vehicle body taken from a diagonally upper rear position;
Fig. 3 is a partially enlarged view of Fig. 2 showing the front structure of the vehicle body;
Fig. 4 is a bottom view showing the front structure of the vehicle body;
Fig. 5 is a side view showing the front structure of the vehicle body;
Fig. 6 is a cross-sectional view showing a portion of the front structure coupling a lower support member and a second crash box in the vehicle body;
Fig. 7A is a partial bottom view showing the front structure of the vehicle body prior to deformation caused by a vehicle collision;
Fig. 7B is a partial bottom view showing the second crash boxes of Fig. 7A when being deformed during a vehicle collision;
Fig. 7C is a partial bottom view showing the second crash boxes of Fig. 7A after being deformed during a vehicle collision;
Fig. 8 is a partially cutaway perspective view showing a modified example of the front structure of a vehicle body taken from a diagonally upper rear position; and
Fig. 9 is a perspective view showing a conventional bumper device as one example of a front structure of a vehicle body.

### DETAILED DESCRIPTION OF THE PREFERRED EMBODIMENTS

One embodiment of a front structure of a vehicle body will now be described with reference to the drawings. In the drawings, arrow Fr indicates the front direction as viewed from the vehicle body, arrow Up indicates the upper direction as viewed from the vehicle body, and arrow W indicates the lateral direction of the vehicle body.

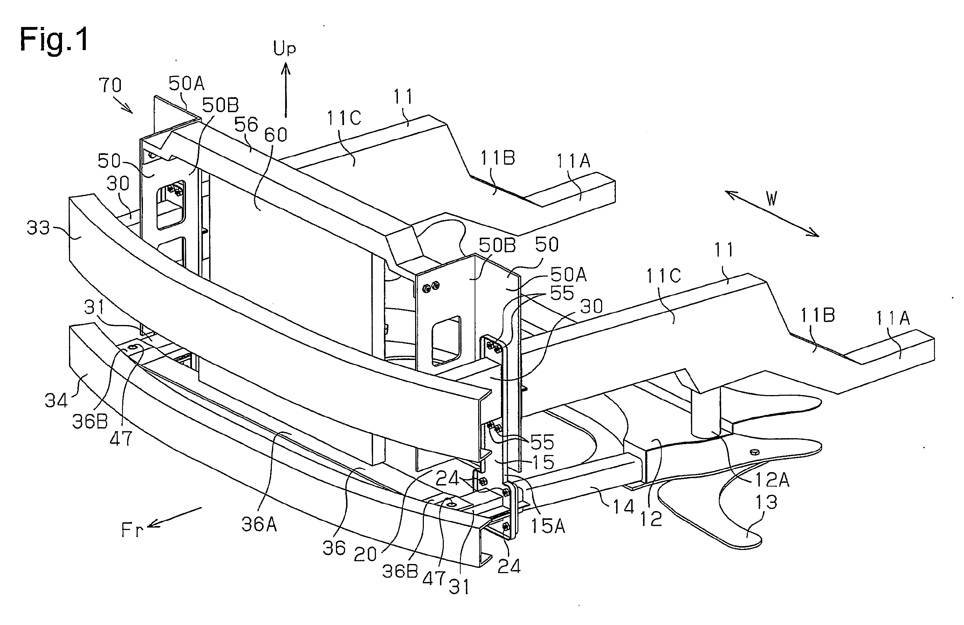

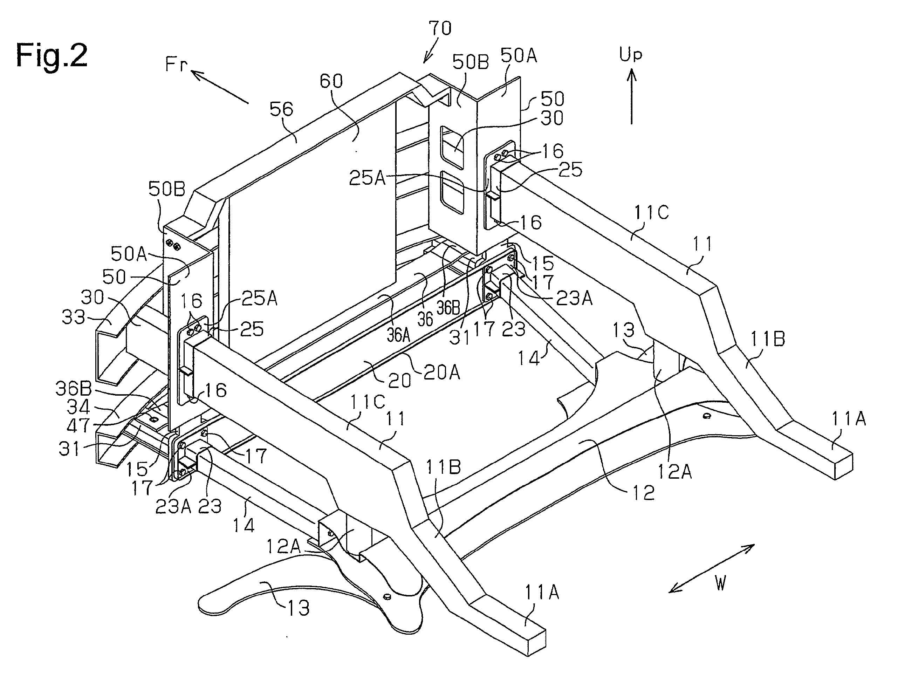

As shown in Figs. 1 and 2, a front structure of a vehicle body includes two side frames 11 located at the two lateral sides of the vehicle body. Each side frame 11 is formed by a metal tetragonal tube and includes a rear portion 11A, which is coupled to the vehicle body and extended toward the rear of the vehicle body, a sloped portion 11 B, which extends diagonally upward toward the front of the vehicle body from the front end of the rear portion 11 A, and a front portion 11C, which extends toward the front of the vehicle body from the front end of the sloped portion 11 B.

A suspension member 12 is coupled from the lower side to the side frames 11. More specifically, projections 12A project from the two lateral end portions of the upper surface of the suspension member 12. Each projection 12A includes a threaded hole (not shown), which opens toward the upper side. Each projection 12A is coupled to the corresponding side frame 11 at the rear end of the front portion 11C by a bolt (not shown).

Two suspension arms 13 are pivotally supported in the vertical direction of the vehicle body by the suspension member 12. The suspension member 12 is a butterfly type suspension member in which the two lateral end portions extend in the longitudinal direction of the vehicle body. Rear ends of two lower members 14 are coupled by bolts (not shown) to the suspension member 12 at the front ends of the lateral end portions. Each lower member 14 is formed by a metal tube.

The front ends of the lower members 14 and the front ends of the front portions 11C of the side frames 11 are located at the same position in the longitudinal direction of the vehicle body. Vertical posts 15, which are formed by metal plates extending in the vertical direction of the vehicle body, are coupled by bolts 16 and 17 (refer to Fig. 2) to the front ends of the lower members 14 and the side frames 11 at the two lateral sides of the vehicle body.

The edge of the front surface of each vertical post 15 is bent to form an outer rib 15A (refer to Fig. 1), which functions as a first reinforcement rib. Each vertical post 15 includes through holes (not shown) to receive the shanks of the bolts 16 and 17 when coupling the corresponding side frame 11 and the corresponding lower member 14.

As shown in Fig. 2, a coupling member 20, which is formed by a metal plate extending in the lateral direction of the vehicle body, is located between the vertical posts 15 and the front ends of the lower members 14. The coupling member 20 is arranged on and coupled, from the rear side of the vehicle body, to the portions of the vertical posts 15 where the lower members 14 are coupled.

The coupling member 20 is a tetragonal plate and has a uniform cross-sectional shape throughout its elongated direction. The coupling member 20 is coupled to the vertical posts 15 located at the lateral sides of the vehicle body so that the thicknesswise direction of the coupling member 20 coincides with the longitudinal direction of the vehicle body. The coupling member 20 extends straight in the lateral direction of the vehicle body to couple the vertical posts 15. The coupling member 20 does not include a margin that allows for bending toward the outer side in the lateral direction of the vehicle body. In this manner, the coupling member 20 is coupled to the vertical posts 15 at portions coupled to the lower member 14. This restricts displacement in the lateral direction of the vehicle body. The edge of the rear surface of the coupling member 20 is bent to form an outer rib 20A, which functions as a second reinforcement rib.

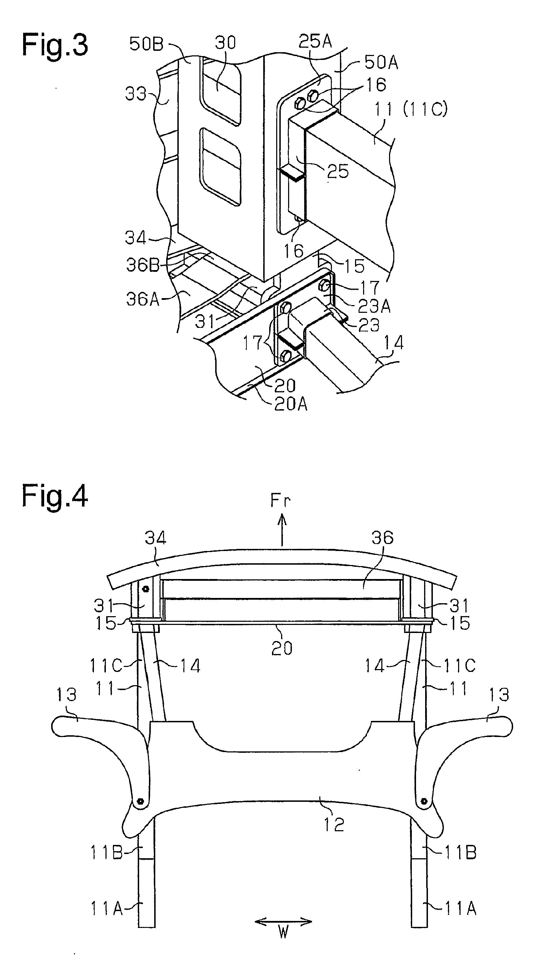

As shown in Fig. 3, the coupled surfaces of the vertical posts 15 and the coupling member 20 are opposite to the surfaces including the outer ribs 15A and 20A. Further, the two lateral ends of the coupling member 20 include through holes (not shown) that receive the shanks of the bolts 17 when coupling the coupling member 20 to the vertical posts 15.

A flange assembly 23 is welded and coupled to the front end of each lower member 14. The flange assembly 23 includes a flange 23A, which is a tetragonal plate, and through holes (not shown), which receive the shanks of the bolts 17.

The shanks of the bolts 17 are inserted from the rear side into the aligned through holes of the flange assembly 23, the coupling member 20, and the vertical posts 15. Nuts 24 (refer to Fig. 1) are fastened to the shanks of the bolts 17 projecting from the front surface of the vertical posts 15 to couple together the flange assembly 23, the coupling member 20, and the vertical posts 15.

A flange assembly 25 is welded and coupled to the front end of each side frame 11. The flange assembly 25 includes a flange 25A, which is a tetragonal plate, and through holes (not shown), which receive the shanks of the bolts 16.

As shown in Fig. 1, first and second crash boxes 30 and 31, each formed by a metal tetragonal tube extending in the longitudinal direction of the vehicle body, include rear ends welded and coupled to the front surfaces of the vertical posts 15.

The first crash boxes 30 are coupled from the front to the vertical posts 15 at the portions of the vertical posts 15 coupled to the side frames 11. The second crash boxes 31 are coupled from the front to the vertical posts 15 at the portions of the vertical posts 15 coupled to the lower members 14. That is, in the vertical direction, the portions where the second crash boxes 31 and the vertical posts 15 are coupled overlap the portions where the lower members 14 and the vertical posts 15 are coupled.

The first and second crash boxes 30 and 31 have the same length in the longitudinal direction of the vehicle body. The front ends of the first and second crash boxes 30 and 31 are located at the same position in the longitudinal direction of the vehicle body. The front ends of the first and second crash boxes 30 and 31 are coupled by bolts (not shown) to first and second bumper reinforcements 33 and 34, which extend in the lateral direction of the vehicle body.

The first and second bumper reinforcements 33 and 34, entirely in their elongated directions, have a generally uniform channel-shaped cross-section that opens toward the rear of the vehicle body. The two lateral ends of the first bumper reinforcement 33 are coupled to the front ends of the first crash boxes 30. The two lateral ends of the second bumper reinforcement 34 are coupled to the front ends of the second crash boxes 31. When collision load is applied from the front of the vehicle to the bumper reinforcements 33 and 34, the crash boxes 30 and 31 are axially compressed and deformed to absorb or reduce the collision load. The front end surfaces of the first and second bumper reinforcements 33 and 34 are located at substantially the same position. Thus, for example, when the vehicle crashes, collision load is basically applied at the same time to the first and second bumper reinforcements 33 and 34. Further, the first and second crash boxes 30 and 31 are lower in strength than the side frames 11 and the lower members 14. Thus, when collision load is received from the front of the vehicle body, the side frames 11 and the lower members 14 support the corresponding crash boxes 30 and 31 from the rear until the crash boxes 30 and 31 are axially compressed and deformed. That is, the front structure of the vehicle body is sequentially deformed from the front toward the rear of the vehicle body to minimize deformation of the vehicle body.

Referring to the bottom view of Fig. 4, the suspension member 12 is arranged at the inner side of the wheels, which are supported by the distal ends of suspension arms 13, in the lateral direction of the vehicle body to obtain sufficient steering angle range for the wheels. Thus, the front end of the suspension member 12 is normally arranged at the inner sides of the two lateral ends of each of the bumper reinforcements 33 and 34. Each lower member 14 extends from its rear end toward its front end so that the space widens between the lower members 14.

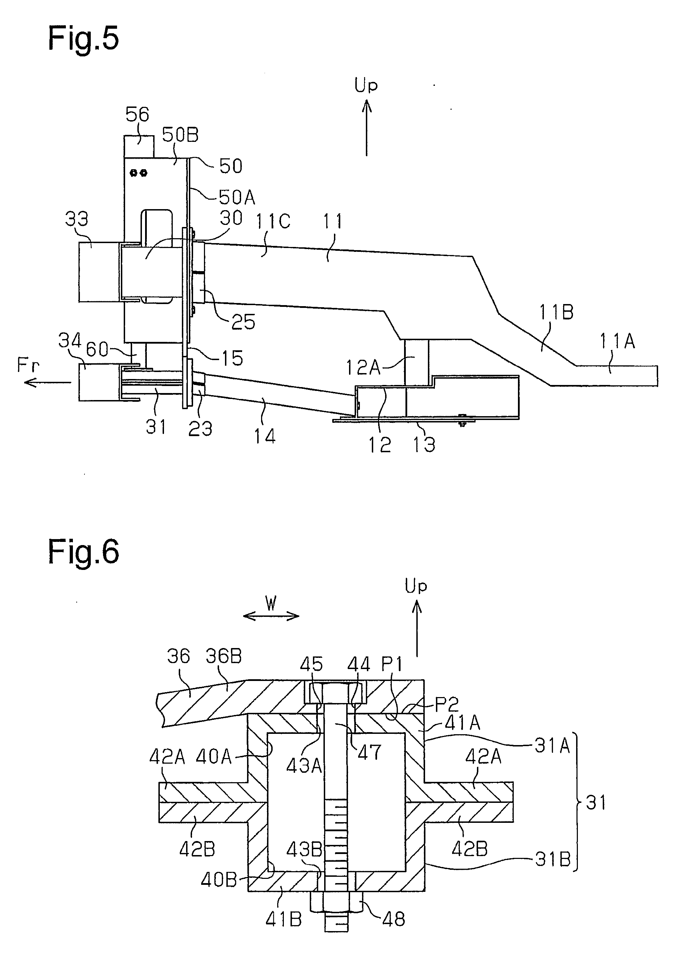

As shown in the side view of Fig. 5, the front end of the suspension member 12 is located at a lower position than the second bumper reinforcement 34. Thus, the lower members 14 extend diagonally toward the upper side from the rear end toward the front end.

As shown in Figs. 1 and 2, a lower support member 36, which is formed by a metal plate extending in the lateral direction of the vehicle body, is held on the upper surfaces of the second crash boxes 31, which are located on the two lateral sides of the vehicle body. The lower support member 36 includes a flat portion 36A, which extends entirely throughout the lower support member 36 in its longitudinal direction, and bent portions 36B, which are located at the two ends of the flat portion 36A. Each bent portion 36B is bent to extend diagonally upward toward the outer side in the lateral direction of the vehicle body and further extend horizontally toward the outer side in the lateral direction of the vehicle body. The horizontally extending section is coupled to the corresponding second crash box 31. The lower support member 36 is coupled to a middle portion of the second crash boxes 31 in the longitudinal direction of the vehicle body. Thus, the portions of the lower support member 36 coupled to the second crash boxes 31 are arranged in front of the portions of the side frames 11 and the lower members 14 coupled to the vertical posts 15. Each bent portion 36B of the lower support member 36 has a flat lower surface P1 (refer to Fig. 6). The lower support member 36 has low strength so that the front end of the front structure of the vehicle body readily starts deformation when, for example, the vehicle crashes. In the present embodiment, the crushing strength of the lower support member 36 is set so as not to obstruct the axial compression and deformation of the second crash boxes 31.

As shown in Fig. 6, each second crash box 31 includes two vertically separate units, namely, an upper unit 31A and a lower unit 31 B, which extend in the direction the second crash box 31 is elongated. The units 31 A and 31 B, which are formed by pressing single sheets of metal, include bent portions 41 A and 41 B and flanges 42A and 42B, respectively. The bent portions 41 A and 41 B have channel-shaped cross-sections that define recesses 40A and 40B opening one side of the corresponding units 31A and 31 B. The flanges 42A and 42B extend in the lateral direction of the vehicle body from the two edges of each of the bent portions 41A and 41 B. While the flanges 42A and 42B are placed on each other with the openings of the recesses 40A and 40B facing each other, the units 31 A and 31 B are welded and coupled to each other to form a tetragonal tube extending in the longitudinal direction of the vehicle body.

The upper end surface and the lower end surface of the second crash box 31, that is, end walls P2 of the bent portions 41A and 41 B of the two units 31 A and 31 B, are flat and include through holes 43A and 43B, which extend in the thicknesswise direction of the units 31 A and 31 B. A recess 44 is formed in the upper surface of the bent portion 36B of the lower support member 36. The bottom end of the recess 44 includes a through hole 45, the size of which is about the same as the size of the through holes 43A and 43B of the two units 31A and 31 B. While the through hole 45 of the lower support member 36 is aligned with the through hole 43A of the upper unit 31A, the shank of a bolt 47 is inserted through the through holes 45 and 43A from the upper side with the lower surface P1 of the bent portion 36B of the lower support member 36 held in planar contact with the end wall P2 of the bent portion 41A of the upper unit 31A. The distal end of the shank of the bolt 47 is inserted through the through hole 43B of the lower unit 31 B and projected out of the end wall of the bent portion 41 B. A nut 48 is fastened to the projecting distal end of the shank to couple the bent portion 36B of the lower support member 36 to the end wall of the bent portion 41A of the upper unit 31A. Further, the head of the bolt 47 is entirely accommodated in the recess 44 in the bent portion 36B of the lower support member 36.

As shown in Figs. 1 and 2, two side support members 50 are coupled by coupling pieces (not shown) to the lateral ends of the lower support member 36 from the upper side. Each side support member 50 is formed to be L-shaped when viewed from above by bending a single sheet of metal at a right angle. The bent portion of the side support member 50 is located at the inner side in the lateral direction of the vehicle body. More specifically, the side support member 50 includes a first side wall 50A, which extends in the lateral direction of the vehicle body, and a second side wall 50B, which extends from the first side wall 50A toward the front of the vehicle body.

As shown in Fig. 2, the first side walls 50A of the side support members 50 are located between the vertical posts 15 and the front ends of the side frames 11. The rear surface of each first side wall 50A includes through holes (not shown), which receive the shanks of the bolts 16.

The flange assembly 25 of each side frame 11, the first side wall 50A of the corresponding side support member 50, and the vertical post 15 are positioned to align the through holes that receive the shanks of the bolts 16 from the rear. Nuts 55 (refer to Fig. 1) are fastened to the distal ends of the shanks of the bolts 16 projecting out of the front surface of each vertical post 15 to couple together the flange assembly 25 of the side frame 11, the first side wall 50A of the side support member 50, and the vertical post 15.

An upper support member 56, which is formed by a metal plate extending in the lateral direction of the vehicle body, is held by the upper ends of the second side walls 50B of the side support members 50, which are located at the two lateral side of the vehicle body. The lower support member 36, the side support member 50, and the upper support member 56 form a radiator support 70. The lower support member 36, which forms a lower portion of the radiator support 70, supports a bottom surface of the radiator 60. An upper surface of the radiator 60 is supported by the upper support member 56, which forms an upper portion of the radiator support 70. The lower end of the radiator 60 is opposed to the coupling member 20 in the longitudinal direction of the vehicle body. More specifically, the radiator 60 and the coupling member 20 are overlapped with each other in a plane projected from the front of the vehicle body.

The operation of the vehicle body front structure in the present embodiment will now be described.

In the present embodiment, the lower support member 36 is coupled to the middle portion of the second crash boxes 31 so that the installation area occupied by the second crash boxes 31 overlaps the installation area occupied by the radiator 60 in the longitudinal direction of the vehicle body. This eliminates the need to provide different installation areas for the second crash boxes 31 and the radiator 60 in the longitudinal direction of the vehicle body. Thus, even if the second crash boxes 31 are lengthened to increase the efficiency for absorbing the collision load applied from the front of the vehicle, this would not reduce the open space behind the radiator 60 for accommodating on-board components such as the engine. Accordingly, the efficiency for absorbing the collision load applied from the front of the vehicle body can be increased, while ensuring or maintaining the capacity for accommodating on-board components such as the engine.

In the present embodiment, the outer surface P2 of the end wall of the upper unit 31A forming the upper end surface of each second crash box 31 is entirely flat in the direction the second crash box 31 is elongated. Further, the bent portions 36B located at the two ends of the lower support member 36 each have the flat lower surface P1. Thus, the second crash boxes 31 are stably coupled to the lower support member 36 in the vertical direction with the flat surfaces contacting each other.

In the present embodiment, each second crash box 31 includes the upper unit 31A and the lower unit 31 B, which are separated in the vertical direction. Each of the units 31A and 31 B is formed by bending a single sheet of metal. The units 31Aand 31B include bent portions 41A and 41 B that form the recesses 40A and 40B opening one side of the corresponding units 31A and 31B. The end wall of the bent portion 41A of the upper unit 31A includes a flat surface that is in planar contact with the lower support member 36. For example, if the second crash box 31 were to be formed by two units, namely, a left unit and a right unit, separated in the lateral direction of the vehicle body, the flat surface of the second crash box 31 that comes into planar contact with the lower support member 36 would be formed by the plurality of units. In contrast with such a case, a single flat surface that is free of steps is easily formed in the present embodiment.

In the present embodiment, the bolts 47 coupling the lower support member 36 to the second crash boxes 31 extend through the second crash boxes 31 in the vertical direction of the vehicle body intersecting the elongated direction of the second crash boxes 31. This limits situations in which the rigidity of the second crash boxes 31 is asymmetrical in the extension direction of the bolts 47. Thus, when collision load is transmitted to each second crash box 31 from the front of the vehicle body, bending of each second crash box 31 toward one side of the bolt 47 is limited, and the second crash box 31 is axially compressed and deformed in a proper manner. This further increases the efficiency for absorbing the collision load applied from the front of the vehicle body.

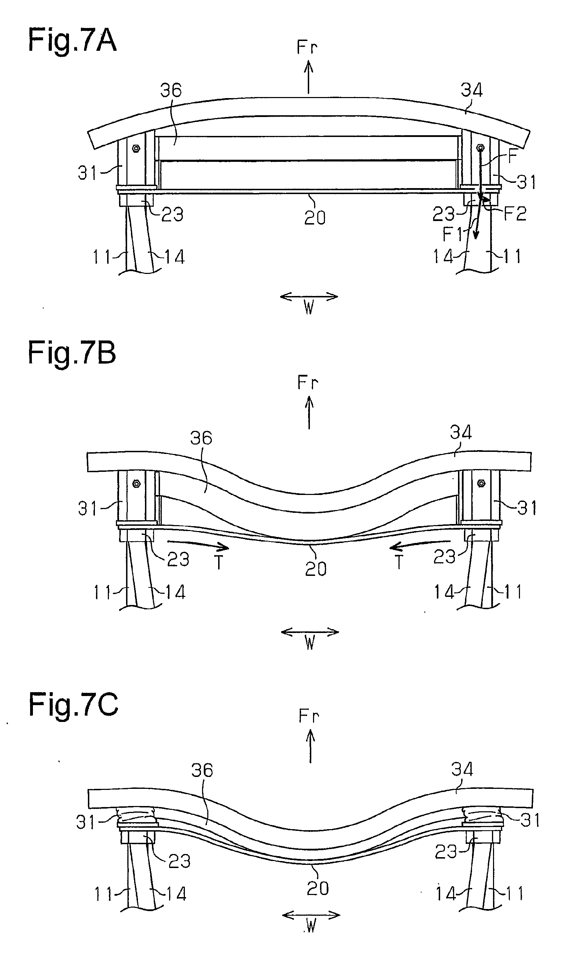

Referring to Fig. 7A, when collision impact is received from the front of the vehicle body, the collision impact is transmitted from the second bumper reinforcement 34 via the second crash boxes 31 and the vertical posts 15 to the lower members 14. In this case, the intersecting angle of the second crash boxes 31 and the lower members 14 as viewed from above may cause component forces to act on the vertical posts 15 in the lateral direction of the vehicle body and the outer direction of the vehicle body.

As illustrated in the bottom view of Fig. 4, the second crash boxes 31 do not extend in the same direction as the lower members 14. Thus, when pushing force F in the extension direction of the second crash boxes 31 is transmitted via the vertical posts 15 to the lower members 14, the pushing force F is divided into a component force F1, which extends in the direction each lower member 14 extends, and a component force F2, which is perpendicular to the direction the lower member 14 extends and directed toward the outer side in the lateral direction of the vehicle body. As a result, a force directed toward the outer side of the vehicle body also acts on the vertical post 15 that couples the lower member 14 and the second crash box 31. When such a force displaces the vertical post 15 toward the outer side in the lateral direction of the vehicle body, the rigidity required for the vehicle body front structure may no longer be maintained.

In this regard, in the present embodiment, the coupling member 20 restricts displacement of the vertical posts 15, which are located at the two lateral ends of the vehicle, in the lateral direction of the vehicle body. Thus, even if a force directed toward the outer side in the lateral direction of the vehicle body acts on the vertical posts 15, displacement of the vertical posts 15 toward the outer side in the lateral direction of the vehicle body would be restricted. As a result, the lower members 14 are capable of maintaining the supporting rigidity in the direction the second crash boxes 31 extend.

Referring to Fig. 7B, in the present embodiment, the radiator 60 and the coupling member 20 are opposed to each other in the longitudinal direction of the vehicle body. When collision load applied from the front of the vehicle body displaces the radiator 60 toward the rear of the vehicle body, the radiator 60 may push the central portion of the coupling member 20 toward the rear of the vehicle body. This would bend the central portion of the coupling member 20 so as to bulge toward the rear of the vehicle body, and tensile force T would act toward the inner side in the lateral direction of the vehicle body on the portions of the coupling member 20 coupled to the vertical posts 15. As described above, even when force acts on the vertical posts 15 toward the outer side in the lateral direction of the vehicle body, the tensile force T directed toward the inner side in the lateral direction of the vehicle body restricts displacement of the vertical posts 15 toward the outer side in the lateral direction of the vehicle body. Further, the lower members 14 may further ensure the supporting rigidity in the direction the second crash boxes 31 extend.

Thus, referring to Fig. 7C, the second crash boxes 31, which are supported from the rear by the lower members 14, are axially compressed and deformed in the direction the second crash boxes 31 extend. This further increases the efficiency for absorbing collision load applied from the front of the vehicle body.

Further, even after the second crash boxes 31 are axially compressed and deformed, the coupling member 20, which is coupled to the vertical posts 15 located at the two lateral sides of the vehicle body, restrict displacement of the vertical posts 15 in the lateral direction of the vehicle body. This limits displacement of the front ends of the lower members 14 toward the outer side in the lateral direction of the vehicle body that would be caused by collision load applied from the front of the vehicle body, and the lower members 14 would be crushed and deformed as designed. This also increase the efficiency for absorbing collision impact applied from the front of the vehicle body.

In the present embodiment, each lower member 14 extends diagonally upward from the rear end to the front end (refer to Fig. 5). Thus, when pressing force acting in the direction the second crash box 31 extends is applied to the front end of the lower member 14, force would easily act toward the upper side on the front end of the lower member 14.

In this regard, the present embodiment couples the front end of the lower member 14 and the front end of the side frame 11 with the vertical post 15. Thus, even if an upward force acts on the front end of the lower member 14, upward displacement of the front end of the lower member 14 that would be caused by the force is restricted. This also ensures the supporting rigidity in the direction the second crash boxes 31 extend.

In the present embodiment, the coupling member 20 is located between the lower members 14 and the vertical posts 15, and the coupling member 20 restricts displacement of the portions of the vertical posts 15 coupled to the second crash boxes 31 in the lateral direction of the vehicle body. That is, the portions coupling the coupling member 20 and the vertical posts 15 are overlapped in the vertical direction with the portions coupling the second crash boxes 31 and the vertical posts 15. Thus, in the vertical posts 15, the portions to where the second crash boxes 31 apply pushing force from the front of the vehicle body is overlapped in the vertical direction with the portions to where the coupling member 20 apples a reaction force from the rear of the vehicle body. As a result, the structure near the portions of the vertical posts 15 coupled to the coupling member 20 resist shearing in the longitudinal direction that would be caused by forces acting from opposite sides in the longitudinal direction of the vehicle body.

In the present embodiment, the coupling member 20 is arranged on the vertical posts 15 from the rear side, and a reaction force from the coupling member 20 acts on the vertical posts 15 in balance with the collision load applied from the front of the vehicle body. Thus, the vertical posts 15 also ensure supporting rigidity in the direction the first crash boxes 30 and the second crash boxes 31 extend. This axially compresses and deforms the crash boxes 30 and 31 in their extension directions and increases the efficiency for absorbing the collision load applied from the front of the vehicle body.

In the present embodiment, the coupled surfaces of the vertical posts 15 and the coupling member 20 are opposite to the surfaces including the outer ribs 15A and 20A. Although the outer ribs 15A and 20A intersect each other in a plane projected from the front of the vehicle body, the outer ribs 15A and 20A do not interfere with each other. As a result, there is no need to cut out the outer ribs 15A and 20A to avoid interference with each other. This properly maintains the strengths of the vertical posts 15 and the coupling member 20 that are reinforced by the outer ribs 15A and 20A.

As described above, the above embodiment has the advantages described below.
(1) The lower support member 36 is coupled to each second crash box 31 at the middle portion in the direction the second crash box 31 extends. Thus, even if the second crash box 31 is lengthened when the size of the vehicle body is limited especially in the longitudinal direction, the open space behind the radiator 60 is not reduced. Accordingly, while increasing the efficiency for absorbing collision load, the capacity for accommodating on-board components can be ensured or maintained.
(2) The lower support member 36 is in planar contact with the second crash boxes 31. This stably couples the lower support member 36 and the second crash boxes 31.
(3) Each upper unit 31A includes a flat surface that is in planar contact with the lower support member 36. This facilitates the formation of a flat surface compared to when forming the flat surface of the second crash box 31 with a left unit and a right unit.
(4) Asymmetrical rigidity of each second crash box 31 is limited in the direction the bolt 47 extends. Thus, when collision load is applied from the front of the vehicle body, bending of the second crash box 31 toward one side of the bolt 47 is limited, and the second crash box 31 is axially compressed and deformed in a proper manner. This further increases the efficiency for absorbing the collision load applied from the front of the vehicle body.
(5) The coupling member 20 restricts displacement of each vertical post 15 toward the outer side in the lateral direction of the vehicle body. Thus, the second crash box 31 is axially compressed and deformed in a proper manner, and the efficiency for absorbing collision load applied from the front of the vehicle body is further improved.

It should be apparent to those skilled in the art that the present invention may be embodied in many other specific forms without departing from the spirit or scope of the invention. Particularly, it should be understood that the present invention may be embodied in the following forms.

In the above embodiment, the coupling member that connects the vertical posts 15, which are located at the two lateral sides of the vehicle body, does not necessarily have to be a flat plate. For example, as shown in Fig. 8, a coupling member 120 may include a rod 120A, which extends throughout the entire coupling member 120 in the direction the coupling member 120 is elongated, and plates 120B, which are located at the two ends of the rod 120A. In this structure, the area of the coupling member 120 blocking the front and rear sides of the coupling member 120 is smaller than when the coupling member is formed by a flat plate. Thus, the coupling member 120 allows air to smoothly flow toward the engine compartment located behind the coupling member and increases the efficiency for cooling the engine.

In the above embodiment, the coupling member 20 does not necessarily have to be overlapped with the radiator 60 in a plane projected from the front of the vehicle body. The coupling member 20 may be located, for example, at a lower position than the lower support member 36.

In the above embodiment, the reinforcement rib of each vertical post 15 does not have to extend along the edge of the vertical post 15 as long as the reinforcement rib extends in the direction the vertical post 15 is elongated.

In the above embodiment, the reinforcement rib of the coupling member 20 does not have to extend along the edge of the coupling member 20 as long as the reinforcement rib extends in the direction coupling member 20 is elongated.

In the above embodiment, when the strength can be guaranteed, the outer ribs can be omitted from at least either one of the vertical posts 15 and the coupling member 20.

In the above embodiment, each second crash box 31 may be coupled to the corresponding vertical post 15 by bolts. In this case, the coupling member 20 may be located between the second crash box 31 and the vertical post 15. In this structure, the coupling member 20 is placed on the vertical post 15 from the front of the vehicle body.

In the illustrated embodiments, the coupling members 20 and 120 do not necessarily have to be located between the lower members 14 and the vertical posts 15 and may be coupled to the vertical posts 15 at portions differing from where the lower members 14 are coupled.

In the above embodiment, the coupling member does not have to extend straight to couple the vertical posts 15 located at the two lateral sides of the vehicle body. The coupling member may be bent as long as it has sufficient rigidity for restricting displacement of the vertical posts 15 toward the outer side in the lateral direction of the vehicle body.

In the above embodiment, when proper axial compression and deformation of at least the second crash boxes 31 can be guaranteed, the coupling member 20, which couples the vertical posts 15 located at the two lateral sides of the vehicle body, can be omitted as long as the purpose is only to avoid reduction in the open space behind the radiator 60.

In the above embodiment, when the joining strength of the second crash boxes 31 and the lower support member 36 is maintained through welding or the like and symmetrical rigidity for axial compression deformation of the second crash boxes 31 is maintained, the bolts 47 do not necessarily have to be used to couple the second crash boxes 31 and the lower support member 36.

In the above embodiment, among the upper unit 31A and the lower unit 31 B forming the second crash box 31, a first unit may be formed by pressing a single sheet of metal to include a bent portion having a channel-shaped cross-section defining a recess that opens one side of the unit, and a second unit may be formed by a plate that closes the opening in the recess of the first unit. In this case, the lower support member 36 may be coupled in planar contact with the end wall formed by the bent portion of the first unit or in planar contact with one surface of the second unit in the thicknesswise direction.

In the above embodiments, when the joining strength of the second crash boxes 31 and the lower support member 36 is maintained, the lower support member 36 may be coupled to the middle portion of each second crash box 31 in linear contact or point contact with the second crash box 31.

The present examples and embodiments are to be considered as illustrative and not restrictive, and the invention is not to be limited to the details given herein, but may be modified within the scope and equivalence of the appended claims.

## Claims

1. Afront structure of a vehicle body comprising:
a first bumper reinforcement (33) extending in a lateral direction of the vehicle body;
a second bumper reinforcement (34) extending in the lateral direction of the vehicle body below the first bumper reinforcement (33);
two first crash boxes (30), each coupled to one of two ends of the first bumper reinforcement (33), wherein each of the first crash boxes (30) includes a front end, which is coupled to the first bumper reinforcement (33), and a rear end, which is located toward the rear of a vehicle from the front end;
two second crash boxes (31), each coupled to one of two ends of the second bumper reinforcement (34), wherein each of the second crash boxes (31) includes a front end, which is coupled to the second bumper reinforcement (34), and a rear end, which is located toward the rear of the vehicle from the front end;
two vertical posts (15) coupling the rear ends of the first and second crash boxes (30, 31), wherein the vertical posts (15) are located at two lateral sides of the vehicle body;
two side frames (11) respectively coupled to the two vertical posts (15) opposite to the first crash boxes (30);
two lower members (14) coupled to the two vertical posts (15) opposite to the second crash boxes (31); and
a lower support member (36) coupling the second crash boxes (31) to each other and forming a lower portion of a radiator support (70).

2. The front structure of a vehicle body according to claim 1, wherein the lower support member (36) is coupled in planar contact with the second crash boxes (31).

3. The front structure of a vehicle body according to claim 2, wherein the second crash boxes (31) each include two vertically separated units (31 A, 31 B) extending in an elongated direction, and one of the two units (31 A, 31 B) includes a contact surface coupled to the lower support member (36).

4. The front structure of a vehicle body according to claim 3, wherein at least one of the two units (31A, 31B) is a plate including a bent portion (41 A, 41B) that defines a recess (40A, 40B) opening one side of the plate.

5. The front structure of a vehicle body according to claim 3 or claim 4, wherein
the two units (31A, 31 B) each include a through hole (43A, 43B) extending in a vertical direction of the vehicle body, and
the lower support member (36) is coupled to each of the second crash boxes (31) by a bolt (47) inserted through the through hole (43A, 43B) of each of the two units (31A, 31B).

6. The front structure of a vehicle body according to any one of claims 1 to 5, further comprising a coupling member (20) extending in the lateral direction of the vehicle body to couple the vertical posts (15).
